# EUROPEAN PATENT APPLICATION

(11) **EP 2 803 848 A1**
(43) Date of publication of application: **19.11.2014**
(21) Application number: 14166955.6
(22) Date of filing: 05.05.2014
(51) Int. Cl.: F02M 37/02, F02M 37/10, F02M 37/00, F02D 41/30, B60K 15/06, F02M 37/08, B60K 15/03

(54) **Fuel supply system and method for operating**

(30) Priority: 14.05.2013 US 201313893861
(71) Applicant: Delphi Technologies, Inc., Troy MI 48007 (US)
(72) Inventor: Moreno, Daniel, J., El Paso, TX Texas 79912 (US); Moreno, Alejandro, El Paso, TX Texas 79912 (US); Beyer, Sharon Elizabeth, Grand Blanc, MI Michigan 48439 (US); Anderson, Philip Moore, El Paso, TX Texas 79912 (US)
(74) Representative: Allain, Michel Jean Camille

(57) **Abstract**

A fuel supply system (10) includes a fuel tank (14) for holding a volume of fuel and a fuel reservoir (28) disposed within the fuel tank (14). A fuel pump (16) is provided for pumping fuel from the fuel reservoir (28) to a fuel consuming device (12). A jet pump (30) is provided in selective fluid communication with the fuel pump (16) through a jet pump line (36) to selectively aspirate fuel from the fuel tank (14) into the fuel reservoir (28). A fuel level indicator (42) is provided which is responsive to the level of fuel within the fuel reservoir (28) and a valve (38) which is responsive to the fuel level indicator (42) closes the jet pump line (36) when the fuel level indicator (42) indicates that the fuel level reservoir (28) contains a predetermined amount (40) of fuel.

## Description

### TECHNICAL FIELD OF INVENTION

The present invention relates to a fuel supply system for supplying fuel to a fuel consuming device such as an internal combustion engine; more particularly to such a fuel supply system which includes a fuel reservoir disposed within a fuel tank; even more particularly to such a fuel supply system which uses a jet pump to fill the fuel reservoir from fuel within the fuel tank; and still even more particularly to such a fuel supply system which starts and stops the jet pump in response to the level of fuel within the fuel reservoir.

### BACKGROUND OF INVENTION

Fuel supply systems for internal combustion engines typically include a fuel tank for storing a volume of fuel that will be supplied to the internal combustion engine by a fuel pump. When such fuel supply systems are provided for a motor vehicle, the fuel supply system also commonly includes a fuel reservoir positioned within the fuel tank. The fuel reservoir provides a volume of fuel which is filled by fuel from the fuel tank. The fuel pump is positioned within the fuel reservoir in order to ensure an adequate supply of fuel is available to the fuel pump when the fuel tank is not full and dynamics of the motor vehicle may cause the fuel within the fuel tank to slosh or migrate to an area of the fuel tank away from the fuel reservoir. In order to maintain a sufficient level of fuel within the fuel reservoir, a jet pump, powered by pressurized fuel from the fuel pump, is used to aspirate fuel from the fuel tank into the fuel reservoir.

Historically, fuel systems have been provided which are considered to be a return-type fuel system in which the fuel pump is operated to provide a consistent output. In order for a return-type fuel system to operate properly, the fuel pump must be constantly operated to provide enough output to operate the jet pump and to meet the needs of the internal combustion engine at the highest load at which it is expected to operate. Since many internal combustion engines may spend a predominate amount of time operating at a load that is significantly less than the highest load at which it is expected to operate, the fuel pump will pump excess fuel which is subsequently returned to the fuel tank. Accordingly, energy is wasted by pumping fuel that is subsequently returned to the fuel tank. Furthermore, the jet pump runs continuously, even when the fuel reservoir is full due the fuel level of the fuel tank being higher than the fuel reservoir or due to the jet pump having completely filled the fuel reservoir. Accordingly, energy is also wasted by pumping fuel that is used to operate the jet pump when the fuel reservoir is full.

More recently, fuel supply systems have been developed which are considered to be returnless or on-demand fuel systems in which the fuel pump is varied in speed to provide a variable output to meet the needs of the internal combustion engine and the jet pump. While such returnless systems do not pump excess fuel to the internal combustion engine which needs to be returned to the fuel tank, energy is still wasted by operating the jet pump when the fuel reservoir is full as described above relative to the return-type fuel system.

United States Patent No. 7,275,524 to Schelhas et al. describes a returnless fuel supply system which includes a magnet valve in the line that operates the jet pump. The magnet valve may be operated to close the line that operates the jet pump when the fuel level in the fuel tank is sufficiently high to keep the fuel reservoir full by spilling over the top of the fuel reservoir; however, energy is still wasted by operating the jet pump when the fuel reservoir is full due to the jet pump having completely filled the fuel reservoir when the fuel level in the fuel tank is not sufficiently high to keep the reservoir full by spilling over the top of the fuel reservoir. Consequently, the jet pump will continue to operate and excess fuel pumped by the fuel pump will spill over the top of the fuel reservoir into the main portion of the fuel tank.

What is needed is a fuel supply system which minimizes or eliminates one or more of the shortcomings as set forth above.

### SUMMARY OF THE INVENTION

Briefly described, a fuel supply system is provided for supplying fuel to a fuel consuming device. The fuel supply system includes a fuel tank for holding a volume of fuel and a fuel reservoir disposed within the fuel tank. A fuel pump is provided for pumping fuel from the fuel reservoir to the fuel consuming device. A jet pump is provided in selective fluid communication with the fuel pump through a jet pump line to selectively aspirate fuel from the fuel tank into the fuel reservoir when the fuel pump is pumping fuel through the jet pump line. A fuel level indicator is provided which is responsive to the level of fuel within the fuel reservoir and a valve which is responsive to the fuel level indicator closes the jet pump line when the fuel level indicator indicates that the fuel level reservoir contains a predetermined amount of fuel. The fuel supply system further comprises a pressure sensor for determining the pressure of fuel supplied to the fuel consuming device and a pump controller connected to the fuel pump for controlling the fuel pump to produce a desired output. The fuel level indicator is a float. The float directly opens and closes the valve. The fuel supply system further comprises a position sensing arrangement for indicating when the float is at a predetermined position which corresponds to the fuel reservoir containing the predetermined level of fuel. The position sensing arrangement is configured to send a position signal to a pump controller for controlling the fuel pump to produce a desired output. The position sensing arrangement comprises a magnet moveable with the float and a magnet sensor configured to detect movement of the magnet.

A method for operating a fuel system for supplying fuel to a fuel consuming device is provided. The fuel system comprises a fuel tank, a fuel reservoir disposed in the fuel tank, a fuel pump for pumping fuel from the fuel reservoir to the fuel consuming device, a jet pump in selective fluid communication with the fuel pump through a jet pump line for selectively aspirating fuel from the fuel tank into the fuel reservoir when the fuel pump is pumping fuel through said jet pump line, a fuel level indicator responsive to the level of fuel within the fuel reservoir and a valve responsive to the fuel level indicator. The method comprises the steps of:
determining a level of fuel within said fuel reservoir using said fuel level indicator; and
positioning the valve to prevent fluid communication between the fuel pump and the jet pump through the jet pump line when the level of fuel within the fuel reservoir is at least a predetermined level and to permit fluid communication between the fuel pump and the jet pump through the jet pump line when the level of fuel within the fuel reservoir is below the predetermined level.

The method further comprises controlling the output of the fuel pump based on the position of the valve. The fuel level indicator is a float and the position of the valve is determined by the position of the float. The fuel system includes a pressure sensor for determining the pressure of fuel supplied to the fuel consuming device and the position of the valve is determined by the pressure sensor.

### BRIEF DESCRIPTION OF DRAWINGS

This invention will be further described with reference to the accompanying drawings in which:
Fig. 1 a schematic of a fuel system in accordance with the present invention for supplying fuel to an internal combustion engine; and
Fig. 2 is a schematic of another fuel system in accordance with the present invention for supplying fuel to an internal combustion engine.

### DETAILED DESCRIPTION OF INVENTION

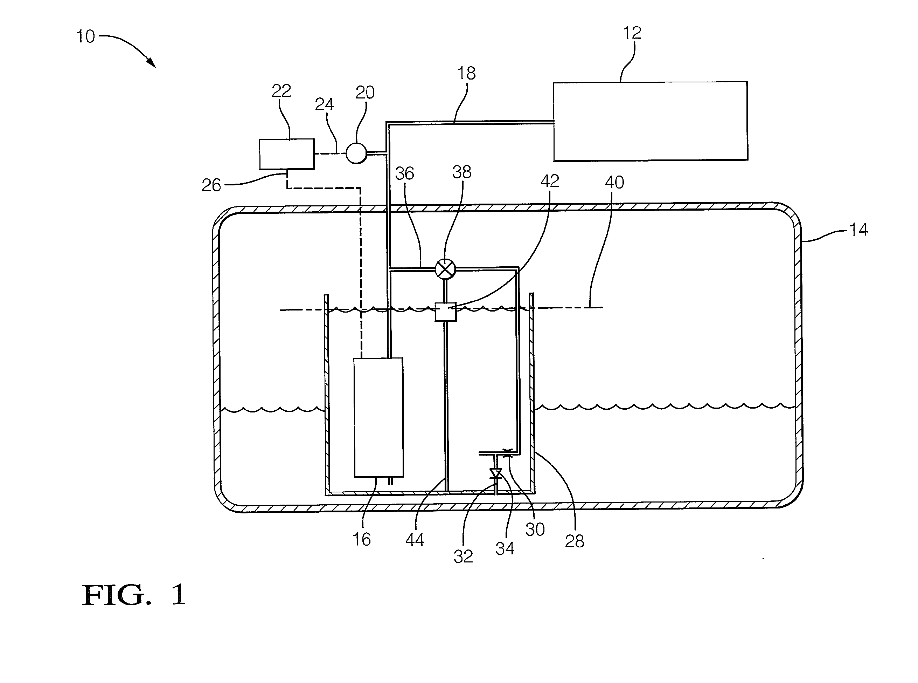

Reference will be made to Fig. 1 which is a schematic of a fuel system 10 in accordance with the invention for supplying fuel to a fuel consuming device illustrated as an internal combustion engine 12. The fuel of fuel system 10 may be any liquid fuel customarily used, for example only, gasoline, diesel fuel, alcohol, ethanol, and the like, and blends thereof.

Fuel system 10 includes a fuel tank 14 for storing a quantity of fuel and a fuel pump 16 for pumping fuel from fuel tank 14 to internal combustion engine 12. Fuel that is pumped by fuel pump 16 is communicated to internal combustion engine 12 through a fuel supply line 18. Fuel pump 16 may be configured to provide a variable output, for example by varying the speed of operation of fuel pump 16, such that fuel pump 16 does not pump excess fuel to internal combustion engine 12 that is returned to fuel tank 14. In order to control fuel pump 16, a pressure sensor 20 may be provided in fluid communication with fuel supply line 18 in order to determine the pressure of the fuel being communicated to internal combustion engine 12. In operation, pressure sensor 20 sends an electric sensor signal indicative of the pressure of fuel in fuel supply line 18 to a fuel pump controller 22 through a pressure sensor circuit 24. Fuel pump controller 22 may be a stand-alone controller or may be a portion of an engine control module that also controls aspects of internal combustion engine 12. Fuel pump controller 22 processes the electric sensor signal from pressure sensor 20 and determines a fuel pump control signal that is sent to fuel pump 16 through a pump control circuit 26. The pump control signal causes fuel pump 16 to operate at a speed that produces a desired output to meet the demand of internal combustion engine 12 without pumping excess fuel to internal combustion engine 12 that would need to be returned to fuel tank 14.

Fuel pump 16 is disposed within a fuel reservoir 28 which is a separate container within fuel tank 14 that is filled with fuel from fuel tank 14. When the fuel level in fuel tank 14 is sufficiently high, fuel reservoir 28 is filled by fuel simply spilling over the top of fuel reservoir 28. However, when the fuel level in fuel tank 14 is not sufficiently high to spill over the top of fuel reservoir 28, fuel reservoir 28 is filled by a jet pump 30. Jet pump 30 operates by passing pressurized fuel from fuel pump 16 through a venturi which causes fuel to be aspirated from fuel tank 14 into fuel reservoir 28 through an aspiration line 32. A check valve 34 may be positioned in aspiration line 32 to prevent fuel from flowing back out of fuel reservoir 28. The pressurized fuel that operates jet pump 30 may be supplied thereto by a jet pump line 36 which is connected to fuel supply line 18 between fuel pump 16 and pressure sensor 20. It should be understood that fuel may also flow naturally into fuel reservoir 28 through aspiration line 32 without the assistance of jet pump 30 until the level of fuel in reservoir 28 is the same as the level of fuel in fuel tank 14.

In order to reduce the power consumption of fuel pump 16, a valve 38 is provided that can be selectively positioned to prevent or permit fluid communication between fuel pump 16 and jet pump 30 through jet pump line 36. Valve 38 is configured to close when fuel reservoir 28 is filled to a predetermined level 40. In order to close valve 38 at predetermined level 40, a fuel level indicator, illustrated as float 42, is provided which is responsive to the level of fuel within fuel reservoir 28. Float 42 is sufficiently buoyant to rise and fall with the rise and fall of fuel within fuel reservoir 28. Float 42 may be guided by a float guide rod 44. Valve 38 is responsive to float 42 such that when float 42 indicates that the level of fuel within fuel reservoir 28 is less than predetermined level 40, valve 38 opens to allow pressurized fuel from fuel pump 16 to operate jet pump 30, thereby aspirating fuel from fuel tank 14 into fuel reservoir 28. When float 42 has moved sufficiently to open valve 38, the pressure at pressure sensor 20 will momentarily drop due to a portion of the output of fuel pump 16 now being sent to jet pump line 36. In this way, pressure sensor 20 effectively determines the position, i.e. open or closed, of valve 38. As a result, fuel pump controller 22 will increase the output of fuel pump 16 to meet the demand of both internal combustion engine 12 and jet pump 30. Conversely, when float 42 indicates that the level of fuel within fuel reservoir 28 has reached predetermined level 40, valve 38 closes to prevent pressurized fuel from fuel pump 16 from being communicated to jet pump 30, thereby reducing the output requirement of fuel pump 16. When float 42 has moved sufficiently to close valve 38, the pressure at pressure sensor 20 will increase momentarily due to jet pump line 36 being blocked. As a result, fuel pump controller 22 will decrease the output of fuel pump 16 to meet the demand of only internal combustion engine 12. Float 42 may be directly mechanically connected to valve 38, thereby opening and closing valve 38 directly. For example only, valve 38 may be a needle valve in which a needle is seated and unseated with a valve seat in response to float 42 or float 42 may be integral with valve 38 and directly open and close jet pump line 36. Alternatively, valve 38 may be an electrically operated valve and float 42 may send an electric signal to open and close valve 38.

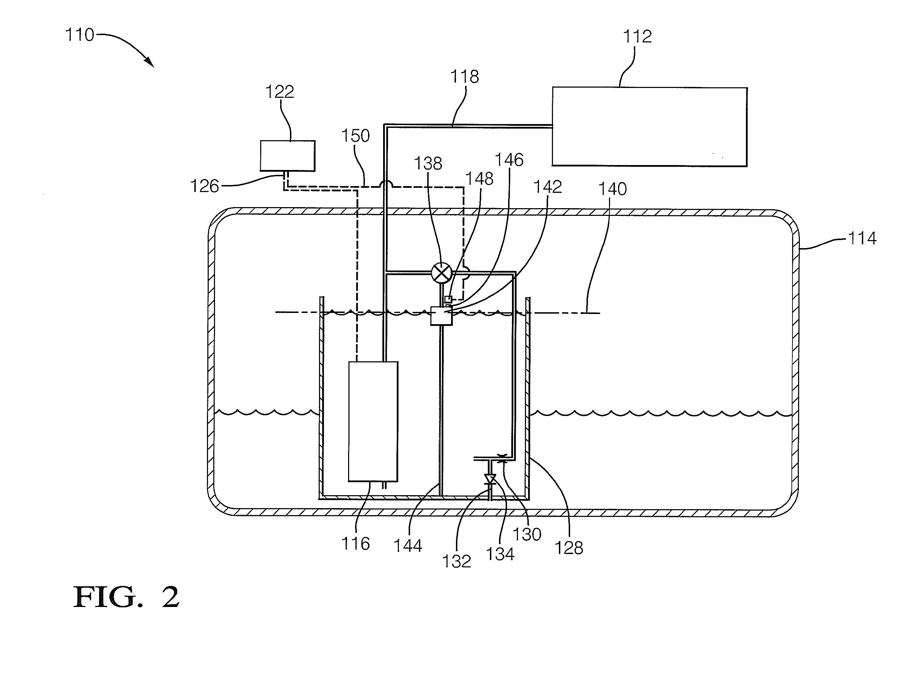

Reference will now be made to Fig. 2 which is a schematic of another fuel system 110 in accordance with the invention for supplying fuel to a fuel consuming device illustrated as an internal combustion engine 112. The fuel of fuel system 110 may be any liquid fuel customarily used, for example only, gasoline, diesel fuel, alcohol, ethanol, and the like, and blends thereof.

Fuel system 110 includes a fuel tank 114 for storing a quantity of fuel and a fuel pump 116 for pumping fuel from fuel tank 114 to internal combustion engine 112. Fuel that is pumped by fuel pump 116 is communicated to internal combustion engine 112 through a fuel supply line 118. Fuel pump 116 may be configured to provide a variable output, for example by varying the speed of operation of fuel pump 116, such that fuel pump 116 does not pump excess fuel to internal combustion engine 112 that is returned to fuel tank 114. In order to control fuel pump 116, a fuel pump controller 122 is provided which processes information about the operation of internal combustion engine 112 and determines a fuel pump control signal that is sent to fuel pump 116 through a pump control circuit 126. The pump control signal causes fuel pump 116 to operate at a speed that produces a desired output to meet the demand of internal combustion engine 112 without pumping excess fuel to internal combustion engine 112 that would need to be returned to fuel tank 114. Fuel pump controller 122 may be a stand-alone controller or may be a portion of an engine control module that also controls aspects of internal combustion engine 112.

Fuel pump 116 is disposed within a fuel reservoir 128 which is a separate container within fuel tank 114 that is filled with fuel from fuel tank 114. When the fuel level in fuel tank 114 is sufficiently high, fuel reservoir 128 is filled by fuel simply spilling over the top of fuel reservoir 128. However, when the fuel level in fuel tank 114 is not sufficiently high to spill over the top of fuel reservoir 128, fuel reservoir 128 is filled by a jet pump 130. Jet pump 130 operates bypassing pressurized fuel from fuel pump 116 through a venturi which causes fuel to be aspirated from fuel tank 114 into fuel reservoir 128 through an aspiration line 132. A check valve 134 may be positioned in aspiration line 132 to prevent fuel from flowing back out of fuel reservoir 128. The pressurized fuel that operates jet pump 130 may be supplied thereto by a jet pump line 136 which is connected to fuel supply line 118. It should be understood that fuel may also flow naturally into fuel reservoir 128 through aspiration line 132 without the assistance of jet pump 130 until the level of fuel in reservoir 128 is the same as the level of fuel in fuel tank 114.

In order to reduce the power consumption of fuel pump 116, a valve 138 is provided that can be selectively positioned to prevent or permit fluid communication between fuel pump 116 and jet pump 130 through jet pump line 136. Valve 138 is configured to close when fuel reservoir 128 is filled to a predetermined level 140. In order to close valve 138 at predetermined level 140, a fuel level indicator, illustrated as float 142, is provided which is responsive to the level of fuel within fuel reservoir 128. Float 142 is sufficiently buoyant to rise and fall with the rise and fall of fuel within fuel reservoir 128. Float 142 may be guided by a float guide rod 144. A position sensing arrangement is provided for indicating the position of float 142 as float 142 rises and falls with the level of fuel within fuel reservoir 128. The position sensing arrangement may include a magnet 146 that is moveable with float 142 and a magnet sensor 148 that is configured to detect movement of magnet 146. Magnet sensor 148 may be, for example, a Hall effect sensor. Magnet sensor 148 sends a position signal to fuel pump controller 122 via a position sensing circuit 150. Fuel pump controller 122 processes the electric sensor position signal and uses the position signal along with the information about the operation of internal combustion engine 112 to determine the fuel pump control signal that is sent to fuel pump 116 through pump control circuit 126. In this way, the position sensing arrangement effectively determines the position, i.e. open or closed, of valve 138. Valve 138 is responsive to float 142 such that when float 142 indicates that the level of fuel within fuel reservoir 128 is less than predetermined level 140, valve 138 opens to allow pressurized fuel from fuel pump 116 to operate jet pump 130, thereby aspirating fuel from fuel tank 114 into fuel reservoir 128. When float 142 has moved sufficiently to open valve 138, magnet 146 has moved sufficiently with respect to magnet sensor 148 such that the position signal sent to fuel pump controller 122 causes fuel pump controller 122 to increase the output of fuel pump 116 to meet the demand of both internal combustion engine 112 and jet pump 130. Conversely, when float 142 indicates that the level of fuel within fuel reservoir 128 has reached predetermined level 140, valve 138 closes to prevent pressurized fuel from fuel pump 116 from being communicated to jet pump 130, thereby reducing the output requirement of fuel pump 116. When float 142 has moved sufficiently to close valve 138, magnet 146 has moved sufficiently with respect to magnet sensor 148 such that the position signal sent to fuel pump controller 122 causes fuel pump controller 122 to decrease the output of fuel pump 116 to meet the demand of only internal combustion engine 112. Float 142 may be directly mechanically connected to valve 138, thereby opening and closing valve 138 directly. For example only, valve 138 may be a needle valve in which a needle is seated and unseated with a valve seat in response to float 142 or float 142 may be integral with valve 138 and directly open and close jet pump line 136. Alternatively, valve 138 may be an electrically operated valve and float 142 may send an electric signal to open and close valve 138.

## Claims

1. A fuel supply system (10, 110) for supplying fuel to a fuel consuming device (12, 112), said fuel supply system (10, 110) comprising:
a fuel tank (14, 114) for holding a volume of fuel;
a fuel reservoir (28, 128) disposed within said fuel tank (14, 114);
a fuel pump (16, 116) for pumping fuel from said fuel reservoir (28, 128) to said fuel consuming device (12, 112);
a jet pump (30, 130) in selective fluid communication with said fuel pump (16, 116) through a jet pump line (36, 136), said jet pump (30, 130) being arranged to selectively aspirate fuel from said fuel tank (14, 114) into said fuel reservoir (28, 128) when said fuel pump (16, 116) is pumping fuel through said jet pump line (36, 136);
a fuel level indicator (42, 142) responsive to the level of fuel within said fuel reservoir (28, 128); and
a valve (38, 138) responsive to said fuel level indicator (42, 142) such that said valve (38, 138) closes said jet pump line (36, 136) when said fuel level indicator (42, 142) indicates that said fuel reservoir (28, 128) contains a predetermined level (40, 140) of fuel.

2. Fuel supply system (10) as in claim 1 further comprising:
a pressure sensor (20) for determining the pressure of fuel supplied to said fuel consuming device (12);
a pump controller (22) connected to said fuel pump (16) for controlling said fuel pump (16) to produce a desired output.

3. Fuel supply system (10, 110) according to any one of the preceding claims wherein said fuel level indicator (42, 142) is a float (42, 142).

4. Fuel supply system (10, 110) according to claim 3 wherein said float (42, 142) directly opens and closes said valve (38, 138).

5. Fuel supply system (110) according to any one of claims 3 to 4 further comprising a position sensing arrangement (146, 148) for indicating when said float (142) is at a predetermined position which corresponds to said fuel reservoir (128) containing said predetermined level (140) of fuel.

6. Fuel supply system (110) according to claim 5 wherein said position sensing arrangement (146, 148) is configured to send a position signal to a pump controller (122) for controlling said fuel pump (116) to produce a desired output.

7. Fuel supply system (110) according to any one of claims 5 to 6 wherein said position sensing (146, 148) arrangement comprises:
a magnet (146) moveable with said float (142); and
a magnet sensor (148) configured to detect movement of said magnet (146).

8. A method for operating a fuel system (10, 110) for supplying fuel to a fuel consuming device (12, 112), said fuel system (10, 110) comprising a fuel tank (14, 114), a fuel reservoir (28, 128) disposed in said fuel tank (14, 114), a fuel pump (16, 116) for pumping fuel from said fuel reservoir (28, 128) to said fuel consuming device (12, 112), a jet pump (30, 130) in selective fluid communication with said fuel pump (16, 116) through a jet pump line (36, 136) for selectively aspirating fuel from said fuel tank (14, 114) into said fuel reservoir (28, 128) when said fuel pump (16, 116) is pumping fuel through said jet pump line (36, 136); a fuel level indicator (42, 142) responsive to the level of fuel within said fuel reservoir (28, 128); and a valve (38, 138) responsive to said fuel level indicator (42, 142); said method comprising the steps of:
determining a level of fuel within said fuel reservoir (28, 128) using said fuel level indicator (42, 142); and
positioning said valve (38, 138) to prevent fluid communication between said fuel pump (16, 116) and said jet pump (30, 130) through said jet pump line (36, 136) when said level of fuel within said fuel reservoir (28, 128) is at least a predetermined level (40, 140) and to permit fluid communication between said fuel pump (16, 116) and said jet pump (30, 130) through said jet pump line (36, 136) when said level of fuel within said fuel reservoir (28, 128) is below said predetermined level (40, 140).

9. Method as in claim 8 further comprising controlling the output of said fuel pump (16, 116) based on the position of said valve (38, 138).

10. Method according to any one of claims 8 to 9 wherein said fuel level indicator (42, 142) is a float (42, 142) and wherein the position of said valve (38, 138) is determined by the position of said float (42, 142).

11. Method according to any one of claims 8 to 10 wherein said fuel system (10) includes a pressure sensor (20) for determining the pressure of fuel supplied to said fuel consuming device (12) and wherein the position of said valve (38) is determined by said pressure sensor (20).
